# EUROPEAN PATENT APPLICATION

(11) **EP 1 555 581 A2**
(43) Date of publication of application: **20.07.2005**
(21) Application number: 05100245.9
(22) Date of filing: 17.01.2005
(51) Int. Cl.: G03G 15/01

(54) **Systems and methods for spectrophotometric assessment of color misregistration in an image forming apparatus**

(30) Priority: 16.01.2004 US 758099
(71) Applicant: Xerox Corporation, Rochester, New York 14644 (US)
(72) Inventor: Butterfield, Paul M., 14519, Ontario (US); Gwaltney, Mark A., 14450, Fairport (US); Sulenski, Timothy J., 14568, Walworth (US)
(74) Representative: Grünecker, Kinkeldey, Stockmair & Schwanhäusser Anwaltssozietät

(57) **Abstract**

A system and method for detecting and correcting color misregistration errors in a color image forming device. Spectrophotometric analysis is performed on special color registration patches to transform color registration errors into a color signal. The color registration patch is designed so the color shift detected by the spectrophotometer allows prediction of the amount of color misregistration.

## Description

### BACKGROUND OF THE INVENTION

### 1. Field of Invention

This invention relates to detecting color misregistration in multi-color image forming systems.

### 2. Description of Related Art

One method of forming images with contemporary electrophotographic multi-color image forming devices, such as a color copier, a color digital copier or a color laser printer, is to uniformly charge a charge-retentive surface, such as a photoreceptor belt, and subsequently expose portions of the surface to define information to be reproduced in a first color. This information is rendered visible using chargeable toner particles which are attracted to the exposed portions of the charge retentive surface but repelled by the remaining portions. The charge-retentive surface is then recharged to a uniform potential and subsequently exposed and developed either at the same image forming station or the next image forming station, if more than one station is used, to form additional color layers which together will form the latent color image.

This recharge, expose and develop (REaD) process is repeated to subsequently develop images of different colors to be superimposed on the surface of the charge-retentive surface before the full color image is transferred to a recording medium, such as paper. Each different color is developed on the charge-retentive surface in an image-on-image (IOI) process. In a typical color image reproducing device, varying levels of the Cyan, Magenta, Yellow and Black, designed as CMYK, are used to form composite color images. Each different image may be formed by using a single exposure device, where each subsequent color image is formed in a subsequent pass of the charge-retentive surface. Alternatively, each different color image may be formed by multiple exposure devices corresponding to each different color image during a single pass of the charge-retentive surface.

One issue which arises when using an image-on-image process for creating multi-color images is color misregistration. Misregistration occurs when a multi-color image is printed having the defect that one or more of the composite toner images is formed out of alignment with respect to one or more of the other composite toner images. In one example, this causes one color image to be spatially shifted on the paper or other recording medium with respect to one or more of the other color images forming the composite image.

When developing subsequent color images onto previously-developed color images, subsequent images are deposited as precisely as possible on the charge retentive surface with respect to any previously-developed images. The preciseness of the location of subsequent images is dictated by the precision of the exposure device for that image forming station. The toner itself does not seek out portions of the charge retentive surface. Rather, the relative charge levels between the toner and the exposed and unexposed portions of the photoreceptor will dictate the location of subsequent images on the photoreceptor. Thus, for a final printed image to be formed with proper color registration, the exposure devices for all stations will ideally be sufficiently spatially precise so as to be capable of charging the same location or pixel on the charge retentive surface. That is to say, a single pixel could be charged and discharged by all four color stations in succession.

In practical operation, the ability of an image forming device to consistently register images will vary with use. One or more exposure devices may become physically misaligned. Also, the charging devices at each of the image forming stations may fail to uniformly charge the photoreceptor prior to formation of subsequent images. For example, during a recharge step, it is important to level the voltages among previously toned and un-toned areas of the charge-retentive surface so that subsequent exposure and development steps are performed across a uniformly charged surface. The greater the difference in voltage between those image areas of the charge-retentive surface previously subjected to a development and recharge step, and those bare non-developed or un-toned areas of the charge-retentive surface, the larger the difference in the development potential can be between these areas for the development of subsequent image layers on the previous layers.

Another factor contributing to color misregistration is the residual charge and the resultant voltage drop that exists across the toner layer of a previously-developed area of the charge-retentive surface. Although it may be possible to achieve a uniform voltage by recharging the previously-toned layer to the same voltage level as the neighboring bare areas, the associated residual toner voltage prevents the effective voltage above any previously-developed toned areas from being re-exposed and discharged to the same level as neighboring bare photoreceptor areas which have been exposed and discharged to the actual desired voltage levels. Furthermore, the residual voltage associated with previously-developed toner images reduces the dielectric and effective development field in the toned areas, which tends to hinder attempts to achieve a desired uniform consistency of the developed mass of subsequent toner images.

These problems become increasingly severe as additional color images are subsequently exposed and developed on the charge retentive surface. Color quality of the final reproduced image is severely threatened by the presence of the toner charge and the resultant voltage drop across the toner layer. The change in voltage due to the toned image can be responsible for color shifts, increased moire, increased color shift sensitivity to image misregistration, and toner spreading at the image edges, thus affecting many of the imaging subsystems.

Conventionally, misregistration is detected through monitoring of printed images by experienced printing personnel. This method is expensive, time consuming and imprecise.

### SUMMARY OF THE INVENTION

In various embodiments, this invention provides systems and methods which can assess color registration and verify performance levels of a multi-color electrophotographic image forming system without operator monitoring.

In various embodiments, this invention provides systems and methods for inline detection of color misregistration in a multi-color electrophotographic image forming system.

In various embodiments, this invention provides systems and methods for inline correction of color misregistration in a multi-color electrophotographic image forming system.

In various embodiments, this invention provides systems and methods for using spectrophotometric analysis to detect and predict color misregistration in a multi-color electrophotographic image forming system.

In various exemplary embodiments of the systems and methods according to this invention, a spectrophotometric device is used in a multi-color electrophotographic image forming device to detect color misregistration. In various exemplary embodiments, the multi-color electrophotograhic image forming device may be a color laser printer, a color laser copier, an ink jet printing device, a facsimile device or a combination printer/scanner or printer/scanner/facsimile device using either laser image forming technology or ink jet image forming technology. A spectrophotometric device illuminates a color image and performs spectral analysis of the reflected image providing a single number or set of coordinates in a multi-dimensional color space which represents that color's location within the color space. Spectrophographic devices are typically used to detect color shift. Color shift is the difference between the color which was supposed to be formed and the color that was actually transferred to the recording medium. The color instruction which was sent to the image forming device can be compared to the color detected by the spectrophotometer on the recording medium to determine the extent, if any, of color shifting which has occurred.

In various exemplary embodiments of the systems and methods according to this invention, one or more multi-color patches are formed by the electrophotographic image forming device for the purposes of detecting color misregistration. The value of the color of the multi-color patch can be compared to the expected color value of a perfectly formed composite image to determine if misregistration has occurred. The pattern of the multi-color patch will be conducive to expressing a particular type of color misregistration. For example, one multi-color patch may express vertical shifts, while another expresses horizontal shifts, and yet another expresses magnification shifts.

In various exemplary embodiments, the spectrophotometric device is attached to the electrophotographic image forming device so that a user may create a multi-color patch and feed it into the spectrophotometric device. In various other exemplary embodiments, the spectrophotometric device may be internal to the electrophotographic image forming device and inline to the image forming process so that the electrophotographic device can monitor its own color registration and make adjustments as necessary when misregistration has been detected.
In other embodiments the image forming system is a digital photocopier.
In a further embodiment the image forming system is an ink jet printer.
In a further embodiment the image forming system is a laser printer.
In a further embodiment the image forming system is one of a facsimile machine and a combination facsimile machine and printer machine.
In a further embodiment the registration patch further comprising a registration patch formed in a combination of colors having a composite color value equivalent to a precalculated or preselected combined color value.
In a further embodiment, an output signal which indicates the results of the spectrophotometric analysis.
In a further embodiment the output signal indicates whether the image forming system is performing within satisfactory limits.
In a further embodiment spectophotographic analysis comprises scanning the registration patch with the spectrophotometric device; and
obtaining a degree of color misregistration based on known dimensions of the registration patch and an amount of color shift between the color detected by the spectrophotometric device and the calculated or selected color value.
In a further embodiment the registration patch comprises at least two superimposed colors formed in a line whose direction is perpendicular to the direction of color misregistration.
In a further embodiment the image forming system further comprising at least one adjustment operation, the adjustment operation able to alter the image forming process of at least one image forming station if the spectrophotometric analysis indicates color misregistration has occurred.

These and other features and advantages of this invention are described in, or are apparent from, the following detailed description of various exemplary embodiments of the systems and methods according to this invention.

### BRIEF DESCRIPTION OF THE DRAWINGS

Fig. 1 illustrates an exemplary four-color image transfer device usable with various exemplary embodiments of the systems and methods of this invention;

Fig. 2 is a flowchart illustrating one exemplary embodiment of a method of using spectrophotometric analysis to detect color misregistration according to this invention;

Fig. 3 illustrates one exemplary multi-color patch conducive to expressing lateral color misregistration;

Fig. 4 illustrates one exemplary multi-color patch conducive to expressing longitudinal color misregistration;

Fig. 5 illustrates one exemplary multi-color patch conducive to expressing magnification color misregistration;

Fig. 6 illustrates one exemplary multi-color patch conducive to expressing diagonal color misregistration;

Fig. 7 is a graph plotting the color difference as a function of color misregistration using the multi-color patch of Fig. 3;

Fig. 8 is a functional block diagram illustrating one exemplary embodiment of a system for detecting and adjusting for color misregistration.

### DETAILED DESCRIPTION OF PREFERRED EMBODIMENTS

The following detailed description of exemplary embodiments of the systems and methods for detection of and correction of color misregistration using spectrophotometric analysis may refer to one specific type of image forming apparatus, a color laser image forming apparatus, for sake of clarity and familiarity. However, it should be understood that the systems and methods according to this invention can be used with any multi-color image forming apparatus in which color misregistration might occur including xerographic and ink jet type image forming apparatus.

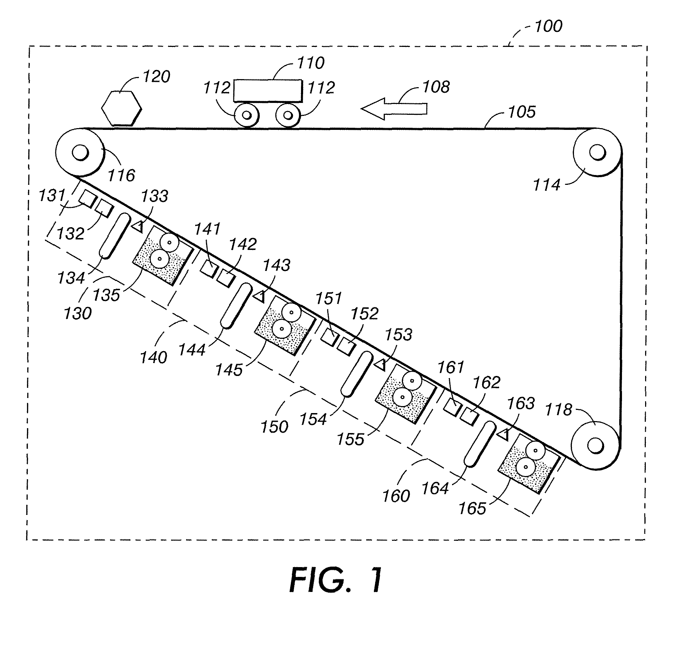

Figure 1 illustrates one exemplary embodiment of a laser color image forming apparatus 100 which uses a charge-retentive surface 105. In various exemplary embodiments, the charge-retentive surface 105 is a photoreceptor belt that is supported by rollers 114, 116 and 118. The charge-retentive surface travels in the direction indicated by the arrow 108 over and around the rollers 114, 116 and 118. The charge-retentive surface 105 is advanced by driving a pair of contact rollers 112 using a motor 110. The charge-retentive surface 105 is advanced past different image forming stations 130, 140, 150 and 160. In various exemplary embodiments, each image forming station applies one color of charged toner to the charge-retentive surface. In various exemplary embodiments, there are four colors of toner used to create a full color image, such as the colors cyan, magenta, yellow and black.

In operation, the charge-retentive surface 105 travels to a discharging station 120 that places the charge-retentive surface 105 at a residual charge state. That is, the discharging device 120 neutralizes the charge on the photoreceptor belt 105 to a residual level. The charge-retentive surface 105 is then transported past a first image forming station, or first color station, 130. Direct current (DC) and alternating current (AC) charge grid voltage devices 131 and 132 of the first image forming station 130 charge the charge-retentive surface of the belt 105 to a relatively high and, ideally, a substantially uniform, potential. In various exemplary embodiments, the charge-retentive surface 105 is negatively charged. However, it should be understood that the systems and methods according to this invention could be used with a positively-charged charge-retentive surface.

Next, an exposure device 134 of the first image forming station 130 selectively discharges areas of the charge-retentive surface 105 corresponding to the image area for the toner color developed using the first image forming station 130. In various exemplary embodiments, the exposure device 134 is a raster output scanner (ROS) or other laser-based output scanning device, or an LED-based output scanning device. The charge-retentive surface 105 then proceeds to the developer device 135 of the first image forming station 130. In various exemplary embodiments, the developer device 135 contains charged toner and one or more electrically insulative magnetic brushes that contact the latent electrostatic image formed on the charge-retentive surface 105 to deposit negatively charged toner material on the exposed portions of the charge-retentive surface 105 containing the latent electrostatic image. In other exemplary embodiments a scavengeless development system is used to avoid scavenging previously deposited toner by a subsequent development station. However, any developer device and developing technique may be used with this invention.

The charge-retentive surface 105 next advances to a second image forming station 140. The second image forming station 140 includes DC and AC charging devices 141 and 142 that re-apply a uniform charge to the charge-retentive surface 105 to recharge the charge-retentive surface 105 to the relatively high, and ideally, substantially uniform potential. The ROS, or other exposure device, 144 re-exposes those portions of the charge-retentive surface 105 on which the next color toner is to be deposited. The next color toner is then applied by the developer station 145 to develop the latent electrostatic image. The process continues until the remaining image forming stations 150 and 160 have been passed. After toners from the developer stations 155 and 165 have been deposited on the charge-retentive surface, the composite toner image is then transferred to a recording medium such as paper.

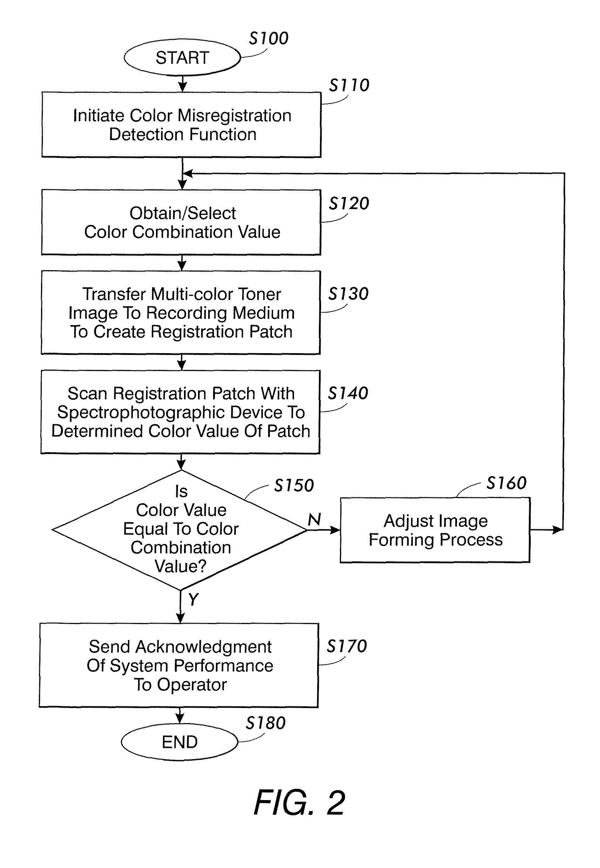

Fig. 2 is a flowchart illustrating a method for detecting and adjusting for color misregistration according to one exemplary embodiment of this invention. Processing begins in Fig. 1 at step S100. Then, processing proceeds to step S110 where the color misregistration detection function is initiated. In various exemplary embodiments, the color misregistration detection function is initiated in response to selection of command by an operator of the image forming device. In various other exemplary embodiments, the color misregistration detection function is initiated automatically by the image forming device at start up or in association with a predetermined calibration schedule.

After the color misregistration detection function is initiated, processing proceeds to step S120 where a color combination value is selected or otherwise obtained. In various exemplary embodiments the color combination value is a Boolean number or set of Boolean coordinates which define a specific color in a color space. For example, the color combination value can be a number or set of coordinates which define a specified mix of cyan and magenta. Thus, spectrophotometric analysis of an image formed of the specified mix of cyan and magenta should return a number or set of coordinates which are equal to the color combination value. In various exemplary embodiments, the color combination value will be calculated or selected without input by a user. However, in various other exemplary embodiments, it may be desirable for a user to select the color combination from a given color space.

Once the color combination value has been calculated or selected, processing proceeds to step S130 where at least two colors of toner are transferred to a recording medium to make a registration patch. The toner colors are transferred as follows. First, a portion of the charge retentive surface is selectively discharged prior to entering the developing station for the first color toner. In the developing station, the first color toner adheres to the discharged potion of the charge retentive surface. Once the first color toner is thus transferred to the charge retentive surface, the charge retentive surface is recharged and advanced to the next developing station for the second color toner. Then, the charge retentive surface including the first toner image is charged to a substantially uniform potential and the same portion of the charge retentive surface containing the image formed of the first color is discharged by a discharge device at the next image forming station. Then, toner of the next image forming station is deposited over the first image. Finally, this composite image is transferred to a recording medium such as paper. Transfer of the composite image is typically facilitated through heated fusing.

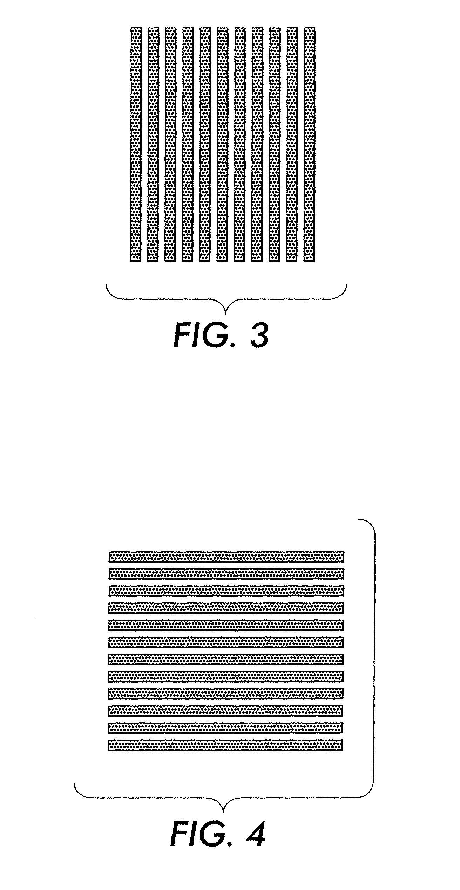

The type or configuration of the registration patch will determine the type of misregistration which can be detected. In various exemplary embodiments, several different misregistration patches may be created by the image forming device in order to detect different types of misregistration. A full explanation of various registration patches and the types of misregistration they can express will be given hereafter in the context of Figs. 3 through 6.

After the multi-color toner image is transferred to the recording medium to create one or more registration patches, processing proceeds to step S 140. At step S 140 spectrophotometric analysis is used to determine the color value of the multi-color image on the registration patch. Spectrophotometers are well known in the art and are commercially available, such as Gretag spectrophotometers and X-Rite spectrophotometers may be used without departing from the spirit or scope of this invention. As another example, low-cost LED-based spectrophotometric devices may be implemented as described above, for example, in U.S. Patent Nos. 6,584,435, 6,587,793, 6,556,932 and 6,449,045, the disclosures of which are hereby incorporated by reference in their entirety.

In various exemplary embodiments, there is a spectrophotometric device, such as a spectrophotometer, inline in the image forming process in the image forming device which can perform spectrophotometric analysis directly on the registration patch. In various other exemplary embodiments, the misregistration patch is output by the image forming device onto a recording medium. The recording medium is then input by an operator of the image forming device into an image scanner containing a spectrophotometric device.

By illuminating the registration patch with light, and measuring the reflectance and absorption of the registration patch, the spectrophotometric device will determine a color value which can be a single number, or a set of coordinates in a multi-dimensional color space, indicative of the composite color image.

Once the color value of the multi-color image on the registration patch has been determined, processing proceeds to step S150 where a determination is made whether the color value of the registration patch is equal to, or sufficiently close to, the color combination value which was calculated or selected at step S120. If the color value of the registration patch is equal to, or sufficiently close to, the color combination value which was calculated or selected at step S120, indicating that misregistration has not occurred, or is within acceptable limits, processing proceeds to step S170. Otherwise, if the color value of the registration patch is not equal to, or sufficiently close to, the color combination value which was calculated or selected at step S120, processing goes to step S160 where an adjustment is made to the image forming process to adjust for the color misregistration. The adjustment may include a physical adjustment of the discharge device at one or more of the image forming stations of the image forming device, or changes in the timing of activiation of the exposure devices, software changes to activate different elements in the exposure device, adjustment of the voltage levels of the charging and/or discharging devices at one or more of the image forming stations, or the like. The specific type of adjustment and/or correction that is made is not important to the systems and methods according to this invention. In fact, it should be understood that once misregistration has been detected, any known or previously undiscovered method of adjusting for image misregistration may be used with the systems and methods of this invention.

After a corrective adjustment has been made to the image forming process at step S160, processing returns to step S120, where a color combination value is selected or calculated. This process continues until a determination is made at step S150 that the color value of the registration patch is equal to, or sufficiently close to, the calculated or selected color combination value.

At step S170, an acknowledgement of the system performance may be provided to the user of the image forming device. In various exemplary embodiments, the acknowledgement may appear on an image output by the image forming device. In various other exemplary embodiments, the acknowledgement of the system performance may appear as a message on a display screen integral to the image forming device. The particular way and method of providing the acknowledgement of the system performance to the user is not important. Rather any combination of a visual and/or audio message is acceptable. Furthermore, it should be appreciated that, particularly when the spectrophotometric device is in line, the system may automatically detect and adjust for misalignment without necessarily notifying the user. Thus, step S170 is optional.

Finally, after an acknowledgement of the system performance has been provided to the user of the image forming device, processing ends at step S180, until the next time the color misregistration detection function is invoked.

Figs. 3-6 illustrate various exemplary registration patches which may be used with the systems and methods according to this invention. Fig. 3 illustrates a vertical pattern formed of superimposed lines of two colors, such as cyan and magenta. This particular patch will tend to express lateral color misregistration errors. Rather than being perfectly superimposed to create a combined color of magenta combined with cyan, if misregistration is present, one of the colors will be offset from the other. Thus, lateral scanning of one of the vertical lines will reveal a portion of pure cyan, a portion of cyan combined with magenta, and a portion of pure magenta. Spectrophotometric analysis will reveal a color shift proportional to the degree of superposition of the two different color images. Thus, the patch will facilitate transformation of the detected color shift due to misregistration errors into a color signal. Misregistration of the line arrays shown in the pattern of Fig. 3 has been shown to produce a color shift correlating to the degree of misregistration. This shift is sufficiently stable to permit prediction and adjustment for color misregistration. A single superimposed line will be indicative of color misregistration at only the location on the charge retentive surface which generated the line image. Therefore, it will be advantageous to use an array of superimposed lines which samples the entire available image space.

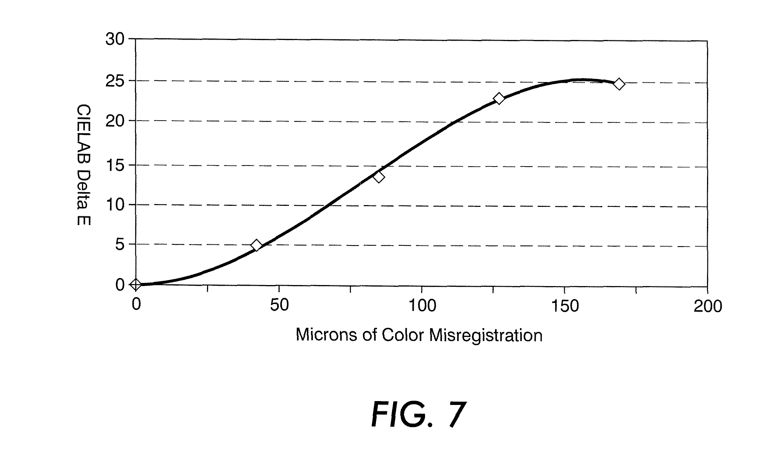

Fig. 7 is a graph illustrating color difference as a function of misregistration based on the patch pattern of Fig. 3. In Fig. 7, a spectrophotometer is used to scan the color patch pattern of Fig. 3. Color shift readings for the vertical patch pattern are given by the spectrophotometer are in the CIELAB color space, with ΔE representing the difference between the expected color and the actual color. Because of the nature of the pattern, and the fact that the expected micron width of the pattern is known, the degree of misregistration in microns can be derived. Fig. 7 plots the microns of color registration at five points in one of the multi-color strips of the array of strips printed in the patch pattern of Fig. 3.

Fig. 4 illustrates another exemplary patch pattern formed of an array of horizontally formed two-color lines. The patch pattern of Fig. 4 will tend to reveal color misregistration occurring because of vertical shifts in superposition of the two colors. Thus, a vertical spectrophotometric scan of one of the lines in Fig. 4 will produce a set of data points analogous to those plotted in Fig. 7 if misregistration has occurred.

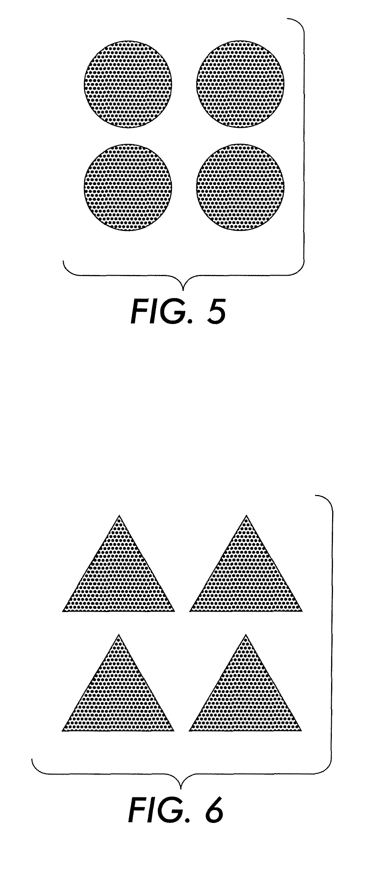

Fig. 5 illustrates another exemplary patch pattern comprised of an array of superimposed two-color circles. The patch pattern of Fig. 5 will tend to reveal color misregistration occurring because of magnification errors at one or more color stations of the image forming device. Magnification errors occur when one of the circles appears larger in diameter than the other. A spectrophotometric scan along either midline will reveal a predictable relationship between the registered color shift and the degree of color misregistration, if magnification misregistration has occurred.

Fig. 6 illustrates another exemplary patch pattern formed of an array of superimposed two-color triangles. The patch pattern of Fig. 6 will tend to reveal diagonal misregistration errors. Diagonal misregistration errors will cause one triangle to be slightly misaligned with the other. Though not illustrated, in various exemplary embodiments, it may be desirable for this registration patch pattern to include triangles having sides which are elevated at angles which vary from 0° to 90° so that at least one triangle will be formed having a side which is perpendicular to the direction of diagonal shift. In various exemplary embodiments, an operator of the image forming system will view the patch pattern and input the pattern which appears most closely oriented in the direction of diagonal shift. In various other exemplary embodiments, the misregistration detection system will automatically determine which triangle or triangles on the patch pattern have a side most closely perpendicular to the direction of diagonal shift. Spectrophotometric scanning in the direction of shift will increase the accuracy of the prediction of misregistration as a function of color shift.

The preceding discussion of registration patches as well as the patches illustrates in Figs. 3-6 is for exemplary purposes only and is in no way meant to be exhaustive. Rather there are may different registration patterns which can be envisioned for detecting color misregistration. This invention is not limited to any particular pattern, but rather is directed to using patterns as a way to generate a color signal from the detected color shift.

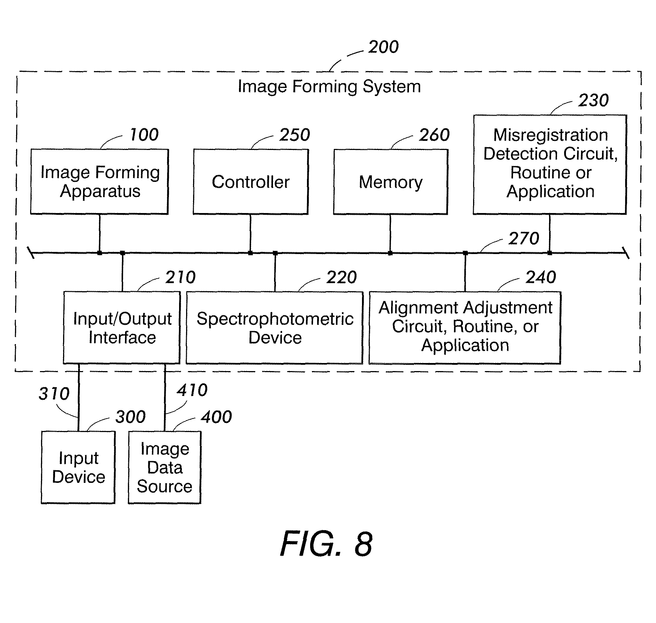

Fig. 8 is a block diagram outlining one exemplary embodiment of an image forming system 200 usable with this invention. As shown in Fig. 8, the image forming system 200 has an input/output interface 210 that is in communication with an input device 300 via a communication channel 310, and that is in communication with an image data source 400 via communication channel 410. In various exemplary embodiments, the communication channels 310 and 410 may be hard wire communication lines, optical fiber communication lines or a wire communication channel. The input/output interface 210 is also linked to various internal components of the image forming system 200, such as an image forming apparatus 100, a controller 250 a memory 360, a spectrophotometric device 220, a misalignment detection circuit, routine or application 230 and an alignment adjustment circuit, routine or application 240 via an internal communications bus 270.

The image forming apparatus 100 may be the image forming apparatus 100 shown in Fig. 1, or any other suitable image forming apparatus.

Each of the links 270, 310 and 410 can be any known or later developed connection system or structure usable to interconnect the respective devices of image forming system 200. It should also be understood that the links 310-610 do not need to be of the same type.

The memory 260 is used for storing any data and/or programs needed for implementing the functions of the various other components of the image forming system 100, and can be implemented using any appropriate combination of alterable volatile or non-volatile memory, or non-alterable or fixed memory. The alterable memory whether volatile or non-volatile can be implemented using any one or more of static or dynamic RAM, a floppy disk and disk drive, a writable or rewritable optical disk and disk drive, a hard drive, flash memory or the like. Similarly, the non-alterable or fixed memory can be implemented using any one or more of ROM, PROM, EPROM, EEPROM, and recording gaps in an optical ROM disk, such as a CD ROM or DVD ROM disk and disk drive, or the like.

In one exemplary embodiment of the operation of the image forming system 200 according to this invention, either in response to input of a source image from the image data source 400 or input of an operator command from the input device 300 to the input/output interface 210, the image forming apparatus 100 is commanded by the controller 250 to check for image misregistration. Whether performed automatically, or in response to a request by the operator of the image forming system, the controller 250 sends an instruction to the image forming apparatus 100 to generate one or more registration patch patterns stored in memory 260 in a predetermined composite image color.

Next, after the image forming apparatus 100 generates the one or more patch patterns in the predetermined composite image color, the controller 250 causes the spectrophotometric device 220 to scan the one or more pattern(s) to check for image misregistration. The spectrophotometric device 220 generates a color value which is sent to the misregistration detection circuit, routine or application 230. The misregistration detection circuit, routine or application 230 compares the color value sent by the spectrophotometric device with the predetermined value stored in memory 260 to determine if image misregistration has occurred and to determine what type of image misregistration has occurred.

If the misregistration detection circuit, routine or application 230 determines that misregistration has occurred, the misregistration circuit, routine or application 230 sends a signal to the alignment adjustment circuit, routine or application 240 indicating the type of image misregistration that has occurred. The alignment adjustment circuit, routine or application 240 makes one or more adjustments to the image forming apparatus 100 to adjust for the specific type of image misregistration that has occurred.

It should also be understood that each of the circuits, routines and/or applications shown in Fig. 8 can be implemented as portions of a suitably programmed general purpose computer. Alternatively, each of the circuits, routines and/or applications shown in Fig. 8 can be implemented as physically distinct hardware circuits using a digital signal processor or using discrete logic elements or discrete circuit elements. The particular form each of the circuits, routines and/or applications in Fig. 8 will take is a design choice and will be obvious and predictable to those skilled in the art. It should also be appreciated that the circuits, routines and/or applications shown in Fig. 8 do not need to be of the same design.

## Claims

1. A method for detecting color misregistration in an image forming system comprising:
forming a registration patch with the image forming system;
performing spectrophotometric analysis on the registration patch;
determining if color misregistration has occurred based on the spectrophotometric analysis of the registration patch.

2. The method for detecting color misregistration according to claim 1, the step of forming a patch pattern further comprising the steps of:
calculating or selecting a combined color value for the registration patch;
forming the registration patch in a combination of colors having a composite color value equivalent to the calculated or selected value.

3. The method for detecting color misregistration according to claim 1, further comprising generating an output signal in response to the step of determining.

4. The method for detecting color misregistration according to claim 3, wherein the signal indicates whether the image forming system is performing within satisfactory limits.

5. The method for detecting color misregistration according to claim 1, the step of performing spectophotographic analysis further comprising scanning the registration patch with a spectrophotometric device; and
obtaining a degree of color misregistration based on known dimensions of the registration patch and an amount of color shift between the color detected by the spectrophotometric device and the calculated or selected color value.

6. The method for detecting color misregistration according to claim 1, wherein the step of forming a registration patch comprises forming a registration patch which has at least two superimposed colors formed in a line whose direction is perpendicular to the direction of color misregistration.

7. The method for detecting color misregistration according to claim 1, further comprising performing an adjustment operation if it is determined that an unacceptable level of color misregistration has occurred.

8. An image forming system capable of detecting and adjusting for color misregistration comprising:
a plurality of image forming stations, each image forming station forming an image in one color;
a charge retentive surface which receives each image from its corresponding image forming station and transfers the combined image to a recording medium;
a spectrophotometric device either attached to or integral to the image forming device; and
and a controller that causes the spectrophotometric device to perform detection of color misregistration on at least one registration patch.

9. The system of claim 8, wherein the controller further implements an adjustment to reduce detected misregistration.

10. An apparatus comprising:
means for forming images;
means for creating at least one registration patch;
means for performing spectrophotometric analysis on the at least one registration patch to determine if color misregistration is occurring on images formed by the image forming means;
means for determining if color misregistration has occurred based on the spectrophotometric analysis of the registration patch;
means for adjusting the image forming process to adjust for the color misregistration.
